# FASCICULE DE BREVET EUROPEEN

(11) **EP 2 783 172 B1**
(45) Date de publication et mention de la délivrance du brevet: **03.04.2019**
(21) Numéro de dépôt: 12795526.8
(22) Date de dépôt: 13.11.2012
(51) Int. Cl.: F25D 3/11, F25D 3/10

(54) **DISPOSITIF DE REFROIDISSEMENT DE PRODUITS EN VRAC**
VORRICHTUNG ZUM KÜHLEN VON SCHÜTTGUT
COOLING DEVICE FOR BULK PRODUCTS

(30) Priorité: 24.11.2011 FR 1160757
(43) Date de publication de la demande: 01.10.2014
(73) Titulaire: L'Air Liquide Société Anonyme pour l'Etude et l'Exploitation des Procédés Georges Claude, 75007 Paris (FR)
(72) Inventeur: ALGOET, Jo, B-8953 Wijtschate (BE); WEISS, Bruno, F-94210 La Varenne Saint-Hilaire (FR)
(74) Mandataire: Mellul-Bendelac, Sylvie Lisette
(86) Numéro de dépôt international: PCT/FR2012/052605
(87) Numéro de publication internationale: WO 2013/076401

(56) Documents cités:
- WO-A1-2004/017000
- FR-A1- 2 512 533
- GB-A- 1 559 920
- GB-A- 2 314 147

## Description

La présente invention concerne le domaine des dispositifs de refroidissement de produits alimentaires en vrac, du genre comportant un tambour monté en rotation axiale, tambour comportant des perforations réparties sur tout ou partie de sa paroi latérale cylindrique, tambour enfermé dans une enceinte isolée thermiquement (on pourra se reporter pour illustrer ce type de dispositif à tambour perforé au document FR-2 512 533).

La littérature illustre différents types de refroidissements (de modes d'apport de frigories) des produits contenus dans le tambour, le document FR-2 512 533 ci-dessus illustre un des ces modes (convection réfrigérée), mais selon un autre des modes répertoriés, le refroidissement des produits contenus dans le tambour est obtenu par la projection d'un cryogène liquide depuis l'extérieur vers la paroi du tambour et au travers de cette paroi, le système de projection étant couramment constitué de rampes s'étendant le long d'une paroi du tambour, en général dans la partie basse de l'enceinte. Le document GB2314147 divulgue aussi un dispositif de refroidissement de produits en vrac, du genre comportant un tambour monté en rotation axiale, le dispositif comportant également un moteur d'entraînement dudit tambour ainsi que des moyens de refroidissement des produits en vrac.

On sait que le fonctionnement de ces équipements se caractérise par la nécessité d'éliminer régulièrement la neige ou glace qui se forme et qui perturbe considérablement le fonctionnement de l'équipement et l'efficacité de l'échange thermique du fait de l'obturation des orifices du tambour.

Pour cela, de façon classique, à intervalles réguliers et préférentiellement programmés, un fluide tel que de l'air comprimé, de l'azote gazeux ou encore du CO₂ gazeux, est soufflé par l'extérieur pour éliminer les dépôts de neige ou glace formés sur les orifices du tambour. La pression de ce fluide de débouchage (décolmatage) est typiquement voisine de 6 bars.

Cette méthode nécessite alors un système spécifique d'amenée et de gestion d'un gaz de débouchage pour mettre en oeuvre ce gaz en pression : à savoir une capacité tampon et l'utilisation d'une pression différente de celle de l'alimentation en cryogène nécessaire à l'opération de refroidissement des produits proprement dite.

Parmi les inconvénients bien connus de ces opérations de « débouchage » on peut citer le fait que dans le cas de l'air comprimé, sa pollution peut entraîner celle du produit alimentaire traité dans le tambour (par de l'huile, de l'humidité...), sans oublier que l'utilisation d'un flux gazeux de « débouchage » à température ambiante est préjudiciable au bilan thermique et donc à la consommation de cryogène du procédé (azote liquide, CO₂ liquide).

La présente invention s'attache à proposer une nouvelle configuration et un nouveau mode d'opération de tels surgélateurs à tambour, améliorant le rendement global de l'opération et notamment la problématique de débouchage des orifices du tambour.

Comme on le verra plus en détail dans ce qui suit, cet objectif et d'autres avantages sont obtenus par la mise en oeuvre des mesures suivantes :
- on ajoute sur un équipement existant au moins une rampe de projection d'un cryogène liquide, rampe additionnelle située préférentiellement en position basse, sous le tambour, de façon à ce que les orifices de la rampe puisse diriger du cryogène liquide depuis l'extérieur vers la paroi du tambour et au travers de cette paroi, ceci sur une longueur de paroi située dans la zone d'entrée du tambour ;
- cette rampe est donc qualifiée d' « additionnelle » car elle s'ajoute aux moyens existants d'injection d'un cryogène dans le tambour pour réaliser le refroidissement des produits proprement dit selon les techniques existantes rappelées plus haut.
- ce positionnement de la rampe additionnelle permet d'une part de refroidir brutalement cette portion d'entrée de tambour pour que la paroi correspondante soit mise en condition de « zéro adhésion ». Cette notion de « zéro adhésion » est connue de l'homme du métier cryogéniste : on fait ainsi en sorte que la surface considérée soit amenée à une température suffisamment froide (inférieure à une température limite donnée que nous expliciterons plus loin), pour que le givre qui se formera sur cette surface attache moins, et sera alors plus aisé à faire chuter, mais aussi pour que les produits traités dans le tambour soient moins adhérents sur l'intérieur du tambour.

On entend par « température suffisamment froide » une température cryogénique typiquement inférieure à -50°C, mais plus préférentiellement inférieure à -80 °C, par exemple voisine de -90 à -100 °C.
- comme on vient de le voir ce positionnement permet donc de refroidir brutalement cette portion d'entrée de tambour pour limiter les phénomènes d'adhésion, mais il permet également de contribuer dès l'entrée des produits à réaliser un pré-refroidissement de ces produits, au moins en surface, ce que l'on peut appeler un « croutage » de ces produits. Ceci participe donc d'une part à limiter leur adhésion aux parois du tambour mais également à entamer leur refroidissement, ce qui est bien évidement très positif en terme de bilan thermique.

Et l'on comprend mieux à la lecture de ce qui précède pourquoi la présente invention s'attache à préférentiellement positionner cette (ou ces) rampe(s) additionnelle(s) en regard de la zone d'entrée du tambour : en effet l'invention, et c'est son mérite, recherche une action intervenant le plus tôt possible dès l'entrée des produits dans le tambour, produits qui pour certains arrivent avec un taux d'humidité significatif, qu'il faut contrecarrer comme expliqué plus haut, sachant qu'ensuite les produits poursuivent leur parcours dans le tambour, ils sont blackboulés à l'intérieur, refroidis, et les phénomènes de givre et d'adhésion plus loin dans le tambour sont en pratique limités ou inexistants.
- de même comme signalé plus haut, le positionnement préféré de cette rampe additionnelle selon l'invention est une position basse, sous le tambour, même si d'autres positionnements tels qu'une position au dessus peut être envisagée, ceci pour la raison suivante : ce positionnement bas prend en compte le fait que les produits dès leur entrée « tombent » dans le tambour, et c'est donc une manière, et ici encore c'est le mérite de la présente invention, d'être mieux à même d'agir le plus vite possible sur le chemin de chute des produits dès leur entrée.
- à titre illustratif, la longueur de cette rampe additionnelle mesure quelques dizaines de centimètres, par exemple une soixantaine de cm, et elle est située à faible distance du tambour, en parallèle, préférentiellement à quelques centimètres de la paroi, par exemple pas plus de 3 cm du tambour.

Comme il apparaitra clairement à l'homme du métier, cette distance entre la rampe et le tambour pourra varier selon le dimensionnement de la rampe (nombre de buses de projection sur la rampe, leur espacement, leur orientation dans l'espace...) mais aussi de la pression du cryogène etc...., en tout état de cause on cherchera à ne pas éloigner trop la rampe pour favoriser son action, et quelques centimètres (par exemple moins de 5 cm, par exemple 3 à 5 centimètres) sont alors une distance préférée selon l'invention.

En d'autres termes, comme il apparait clairement à la lumière de la description précédente :
- si les moyens de refroidissement de l'installation comprennent des rampes d'injection d'un cryogène à l'intérieur du tambour au travers des orifices de la paroi, l'invention AJOUTE une rampe (au moins une rampe) en entrée ;
- si les moyens de refroidissement de l'installation ne comprennent pas de telles rampes d'injection (mais d'autres types de moyens, buses ou convectifs ou autres) alors l'invention implémente une rampe de projection en entrée venant se combiner avec les dits autres moyens.

La présente invention concerne alors un dispositif de refroidissement de produits en vrac, du genre comportant un tambour monté en rotation axiale, tambour comportant des perforations réparties sur tout ou partie de sa paroi latérale cylindrique, le dispositif comportant également un moteur d'entraînement dudit tambour ainsi qu'une enceinte isolée thermiquement de forme allongée selon l'axe dudit tambour et l'enveloppant, des moyens de refroidissement des produits, par exemple d'injection d'un fluide cryogénique dans ladite enceinte (et de là dans la tambour), se caractérisant par la mise en oeuvre des mesures suivantes:
- le dispositif comprend de plus au moins une rampe de projection d'un cryogène liquide, rampe additionnelle située à l'intérieur de l'enceinte, en regard d'une portion de paroi extérieure du tambour située au niveau de la zone d'entrée des produits dans le tambour,
- cette rampe de projection additionnelle est apte à diriger du cryogène liquide vers ladite portion de paroi du tambour et au travers de cette portion de paroi, via lesdites perforations, vers les produits admis dans le tambour.

La présente invention concerne également un procédé de refroidissement de produits en vrac, du genre où les produits sont déversés à l'intérieur d'un tambour monté en rotation axiale, tambour comportant des perforations réparties sur tout ou partie de sa paroi latérale cylindrique, tambour enveloppé par une enceinte isolée thermiquement de forme allongée selon l'axe dudit tambour, et où l'on dispose de moyens de refroidissement des produits, par exemple d'injection d'un fluide cryogénique dans ladite enceinte, se caractérisant par la mise en oeuvre des mesures suivantes:
- on dispose de plus d'au moins une rampe de projection d'un cryogène liquide, rampe additionnelle située à l'intérieur de l'enceinte, en regard d'une portion de paroi du tambour située au niveau de la zone d'entrée des produits dans le tambour,
- cette rampe de projection additionnelle est apte à diriger du cryogène liquide vers ladite portion de paroi du tambour et au travers de cette portion de paroi, via lesdites perforations, vers les produits admis dans le tambour, et
- on projette (préférentiellement en continu) du cryogène liquide sur et au travers de ladite portion de paroi, ceci durant tout ou partie de l'opération de refroidissement des produits réalisée à l'aide desdits moyens de refroidissement.

Selon un des modes de mise en oeuvre de l'invention, outre la projection de cryogène réalisée durant tout ou partie de l'opération de refroidissement elle même, on projette également du cryogène liquide avant le démarrage de l'opération de refroidissement, i.e avant l'admission des produits, afin de pré-refroidir le tambour (mise en froid de l'installation).

D'autres caractéristiques et avantages de la présente invention apparaîtront plus clairement dans la description suivante, donnée à titre illustratif mais nullement limitatif, faite en relation avec les dessins annexés pour lesquels :
- la figure 1 est une vue schématique partielle d'un dispositif de refroidissement à tambour conforme à l'art antérieur ;
- la figure 2 est une vue schématique partielle d'un dispositif de refroidissement à tambour conforme à la présente invention ;
- la figure 3 est une vue de détail d'un mode de réalisation du système d'amenée de cryogène vers les rampes de refroidissement (2) et additionnelle (3) de la figure 2.

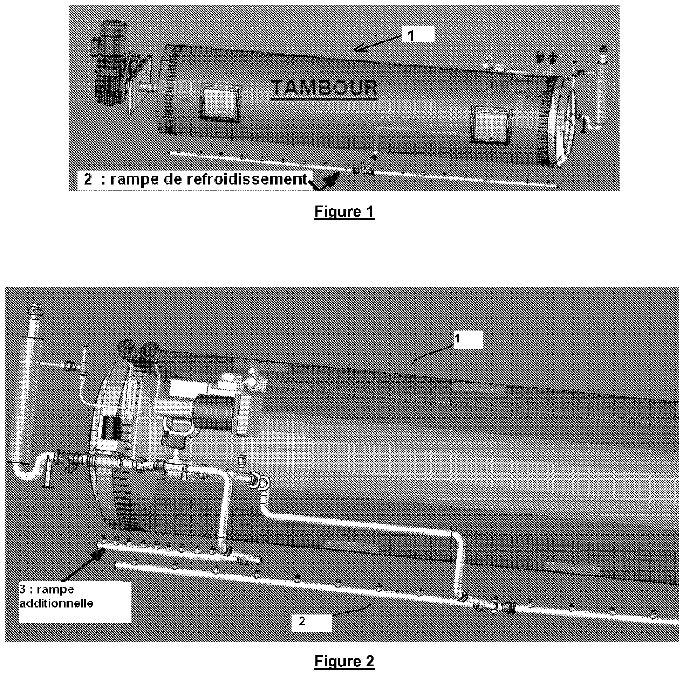

On reconnaît sur la figure 1 un dispositif de refroidissement de produits en vrac dans un tambour 1 monté en rotation axiale, tambour comportant des perforations réparties sur tout ou partie de sa paroi latérale cylindrique (les perforations ou orifices ne sont pas représentés sur le tambour de la figure 1 pour des raisons de lisibilité), ainsi que des moyens de refroidissement des produits, constitué ici d'une rampe 2 de projection (injection) du fluide cryogénique (ici de l'azote liquide) vers la paroi du tambour et au travers de cette paroi vers les produits à refroidir dans le tambour, cette rampe 2 de refroidissement étant située ici, comme c'est le cas classiquement, en position basse sous le tambour 1.

Conformément à l'invention, on propose l'intervention d'au moins une rampe additionnelle que l'on peut bien visualiser sur la figure 2 (rampe additionnelle 3), alimentée par la même source de cryogène liquide en amont, rampe additionnelle qui est située en dérivation de la canalisation alimentant la rampe de refroidissement 2.

Comme il apparaitra clairement à l'homme du métier cryogéniste alimentaire, le nombre de buses de cette rampe additionnelle pourra être déterminé par l'expérience et/ou par étude de simulation (cette dernière considérera notamment le débit de produit et sa température d'entrée).

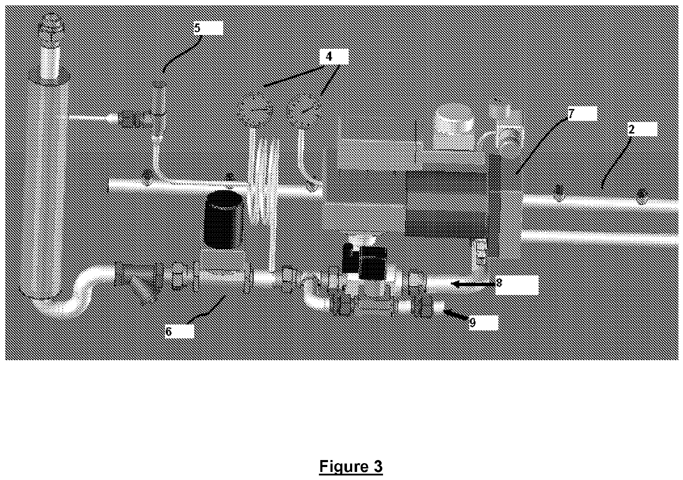

La vue détaillée proposée en figure 3 permet de mieux visualiser un mode possible d'alimentation en cryogène des rampes de refroidissement (2) et additionnelle (3) de la figure 2, mode qui ne représente bien entendu qu'une des nombreuses possibilités de réalisation d'une telle alimentation, mode où l'on reconnaît :
- une vanne 6 alimentant la portion 9 dirigeant le cryogène vers la rampe additionnelle 3 et la portion 8 dirigeant le cryogène vers la rampe de refroidissement 2 ;
- une vanne proportionnelle 7 régissant l'amenée de cryogène, et donc la température du procédé de refroidissement proprement dit des produits (via la rampe 2) ;
- des éléments de gestion de la sécurité des gaz, et notamment une soupape 5, des manomètres 4 etc...

L'invention s'applique particulièrement à la surgélation de produits en vrac et notamment de produits alimentaires solides de dimensions relativement petites, tels que par exemple les lardons, l'égrené, les tranches de saucisses, la viande hachée (chaude et froide), les oeufs brouillés, les champignons entiers, en lamelles, en cubes, les petits pois, les carottes en rondelles, haricots verts, pommes de terre coupées en frites ou en dés, fruits rouges dont notamment les fraises, les myrtilles, les cassis, ou encore les groseilles.

Mais on sait que de telles installations à tambours sont mises en oeuvre pour le refroidissement d'autres types de produits notamment dans des lignes de recyclage de pneus, de câbles électriques etc...La présente invention s'appliquera alors très avantageusement également à ces industries non alimentaires.

Une installation telle que celle représentée en figures 2 et 3 a été utilisée pour refroidir avec succès des demi-mirabelles.

Grace à l'invention, l'utilisation d'air comprimé de qualité agro-alimentaire, source possible de contamination et qui représente un coût important, a pu être supprimée sur le site producteur considéré.

On a pu montrer également que l'invention permet d'éviter le colmatage (collage) du produit à l'entrée du tambour : c'est généralement à cet endroit que les produits restaient selon l'art antérieur colmatés en raison de leur température relativement élevée, la mise en oeuvre de l'invention permet d'atteindre comme c'était souhaité une température dite de zéro adhésion à la surface intérieure du tambour.

## Revendications

1. **Dispositif de refroidissement de produits en vrac**, du genre comportant un tambour (1) monté en rotation axiale, ce tambour (1) comportant des perforations réparties sur tout ou partie de sa paroi latérale cylindrique, le dispositif comportant également un moteur d'entraînement dudit tambour (1) ainsi qu'une enceinte isolée thermiquement de forme allongée selon l'axe dudit tambour (1) et l'enveloppant, ainsi que des moyens (2) de refroidissement des produits, par exemple constitués d'une ou plusieurs rampes d'injection d'un fluide cryogénique dans le tambour (1) au travers desdites perforations, ayant les mesures suivantes:
- le dispositif comprend, de plus, au moins une rampe (3) additionnelle de projection d'un cryogène liquide, cette rampe (3) de projection située à l'intérieur de l'enceinte, et à l'extérieur du tambour (1), en regard d'une portion de paroi du tambour (1) située au niveau de la zone d'entrée des produits dans le tambour (1),
- cette rampe (3) de projection additionnelle est apte à diriger du cryogène liquide vers ladite portion de paroi du tambour (1) et au travers de cette portion de paroi, via lesdites perforations, vers les produits admis dans le tambour (1).

2. Dispositif de refroidissement selon la revendication 1, **se caractérisant en ce que** ladite au moins une rampe (3) de projection additionnelle est positionnée en position basse, sous le tambour (1).

3. Dispositif de refroidissement selon la revendication 1, **se caractérisant en ce que** ladite au moins une rampe (3) de projection additionnelle est positionnée en position haute, au dessus du tambour (1).

4. Dispositif de refroidissement selon l'une des revendications précédentes, **se caractérisant en ce que** lesdits moyens (2) de refroidissement comprennent une rampe de refroidissement (2) située à l'intérieur de l'enceinte, sous le tambour (1) ou au dessus du tambour (1), apte à projeter un cryogène liquide vers la paroi du tambour (1) et au travers de cette paroi vers les produits, connectée en sa partie amont à une source du cryogène liquide au travers d'une vanne proportionnelle (7).

5. Dispositif de refroidissement selon la revendication 4, **se caractérisant en ce que** ladite rampe de refroidissement (2) est située en position basse sous le tambour (1), et **en ce que** ladite rampe de projection (3) additionnelle est située également sous le tambour (1), et étant reliée également en sa partie amont à la même source de cryogène liquide.

6. Dispositif de refroidissement selon la revendication 5, **se caractérisant en ce que** ladite rampe de projection (3) additionnelle est située à une distance de la paroi du tambour (1) ne dépassant pas 3 à 5 centimètres.

7. **Procédé de refroidissement de produits en vrac**, du genre où les produits sont déversés à l'intérieur d'un tambour (1) monté en rotation axiale, ce tambour (1) comportant des perforations réparties sur tout ou partie de sa paroi latérale cylindrique et qui est enveloppé par une enceinte isolée thermiquement de forme allongée selon l'axe dudit tambour (1), et où l'on dispose de moyens (2) de refroidissement des produits, par exemple constitués d'une ou plusieurs rampes d'injection d'un fluide cryogénique dans le tambour (1) au travers desdites perforations, ayant les mesures suivantes:
- on dispose de plus d'au moins une rampe additionnelle de projection (3) d'un cryogène liquide, cette rampe (3) de projection située à l'intérieur de l'enceinte, et à l'extérieur du tambour (1), en regard d'une portion de paroi du tambour (1) située au niveau de la zone d'entrée des produits dans le tambour (1),
- cette rampe (3) de projection additionnelle est apte à diriger du cryogène liquide vers ladite portion de paroi du tambour (1) et au travers de cette portion de paroi, via lesdites perforations, vers les produits admis dans le tambour (1), et
- on projette, à l'aide de ladite rampe (3) additionnelle, du cryogène liquide sur et au travers de ladite portion de paroi, ceci durant tout ou partie de l'opération de refroidissement des produits réalisée à l'aide desdits moyens (2) de refroidissement.

8. Procédé de refroidissement selon la revendication 7, **se caractérisant en ce que** outre la projection de cryogène réalisée à l'aide de ladite rampe (3) additionnelle, durant tout ou partie de l'opération de refroidissement elle même, on projette également du cryogène liquide à l'aide de ladite rampe (3) additionnelle avant le démarrage de l'opération de refroidissement, i.e avant l'admission des produits dans le tambour (1), afin de pré-refroidir le tambour (1).

## Patentansprüche

1. Vorrichtung zum Kühlen von Schüttprodukten, in der Art eine in axialer Drehung montierte Trommel (1) beinhaltend, wobei diese Trommel (1) Perforationen beinhaltet, die über die gesamte, oder einen Teil ihrer zylindrischen Seitenwand verteilt sind, wobei die Vorrichtung auch einen Antriebsmotor der Trommel (1), sowie ein wärmeisoliertes Gefäß in langgestreckter Form entlang der Achse der Trommel (1), das sie umgibt, sowie Mittel (2) zum Kühlen der Produkte beinhaltet, die zum Beispiel aus einer oder mehreren Rampen zum Projizieren eines kryogenen Fluids in die Trommel (1) durch die Perforationen bestehen, die folgenden Maßnahmen aufweisend:
- die Vorrichtung umfasst weiter mindestens eine zusätzliche Rampe (3) zum Projizieren eines flüssigen Kryogens, wobei sich diese Projektionsrampe (3) innerhalb des Gefäßes und außerhalb der Trommel (1) einem Wandabschnitt der Trommel (1) zugewandt befindet, der sich im Bereich der Eintrittszone der Produkte in die Trommel (1) befindet,
- diese zusätzliche Projektionsrampe (3) ist angepasst, um flüssiges Kryogen zu dem Wandabschnitt der Trommel (1) und durch diesen Wandabschnitt über die Perforationen zu den in die Trommel (1) zugeführten Produkten zu leiten.

2. Kühlvorrichtung nach Anspruch 1, **dadurch gekennzeichnet, dass** die mindestens eine zusätzliche Projektionsrampe (3) in der unteren Position unter der Trommel (1) positioniert ist.

3. Kühlvorrichtung nach Anspruch 1, **dadurch gekennzeichnet, dass** die mindestens eine zusätzliche Projektionsrampe (3) in der oberen Position oberhalb der Trommel (1) positioniert ist.

4. Kühlvorrichtung nach einem der vorstehenden Ansprüche, **dadurch gekennzeichnet, dass** die Kühlmittel (2) eine Kühlrampe (2) umfassen, die sich innerhalb des Gefäßes, unter der Trommel (1) oder oberhalb der Trommel (1) befindet, angepasst, um ein flüssiges Kryogen zu der Wand der Trommel (1) und durch diese Wand zu den Produkten zu projizieren, die in ihrem stromaufwärtigen Teil über ein Proportionalventil (7) mit einer Quelle des flüssigen Kryogens verbunden ist.

5. Kühlvorrichtung nach Anspruch 4, **dadurch gekennzeichnet, dass** sich die Kühlrampe (2) in einer unteren Position unter der Trommel (1) befindet, und dadurch, dass sich die zusätzliche Projektionsrampe (3) auch unter der Trommel (1) befindet und auch in ihrem stromaufwärtigen Abschnitt mit derselben Quelle des flüssigen Kryogens verbunden ist.

6. Kühlvorrichtung nach Anspruch 5, **dadurch gekennzeichnet, dass** sich die zusätzliche Projektionsrampe (3) in einem Abstand von der Wand der Trommel (1) befindet, der 3 bis 5 Zentimeter nicht überschreitet.

7. Verfahren zum Kühlen von Schüttprodukten, in der Art, bei dem die Produkte ins Innere einer in axialer Drehung montierten Trommel (1) gekippt werden, wobei diese Trommel (1) Perforationen beinhaltet, die über die gesamte oder einen Teil ihrer zylindrischen Seitenwand verteilt sind, und die von einem wärmeisolierten Gefäß in langgestreckter Form entlang der Achse der Trommel (1) umgeben ist, und wobei man über Mittel (2) zum Kühlen der Produkte verfügt, zum Beispiel bestehend aus einer oder mehreren Rampen zum Projizieren eines kryogenen Fluids in die Trommel (1) durch die Perforationen, die folgenden Maßnahmen aufweisend:
- man verfügt weiter über mindestens eine zusätzliche Projektionsrampe (3) eines flüssigen Kryogens, wobei sich diese Projektionsrampe (3) innerhalb des Gefäßes und außerhalb der Trommel (1) einem Wandabschnitt der Trommel (1) zugewandt befindet, der sich im Bereich der Eintrittszone der Produkte in die Trommel (1) befindet,
- diese zusätzliche Projektionsrampe (3) ist angepasst, um flüssiges Kryogen zu dem Wandabschnitt der Trommel (1) und durch diesen Wandabschnitt über die Perforationen zu den in die Trommel (1) zugeführten Produkten zu leiten, und
- flüssiges Kryogen wird mittels der zusätzlichen Rampe (3) auf und durch den Wandabschnitt projiziert, wobei dies während des gesamten oder eines Teils des Produktkühlvorgangs, der durch die Kühlmittel (2) durchgeführt wird, erfolgt.

8. Verfahren zum Kühlen nach Anspruch 7, **dadurch gekennzeichnet, dass** zusätzlich zu dem mittels der zusätzlichen Rampe (3) durchgeführten Projizieren von Kryogen während des gesamten oder eines Teils des Kühlvorgangs selbst auch flüssiges Kryogen mittels der zusätzlichen Rampe (3) vor der Aufnahme des Kühlvorgangs, d. h. vor der Aufnahme der Produkte in die Trommel (1), projiziert wird, um die Trommel (1) vorzukühlen.

## Claims

1. Device for cooling bulk products, of the type comprising a drum (1) mounted in axial rotation, this drum (1) comprising perforations distributed over all or a portion of the cylindrical lateral wall thereof, the device also comprising a motor for driving said drum (1) as well as a thermally insulated chamber of elongate form along the axis of said drum (1) and enveloping it, as well as means (2) for cooling products, for example consisting of one or more manifolds for injecting a cryogenic fluid into the drum (1) through said perforations, having the following measures:
- the device comprises, in addition, at least one additional manifold (3) for spraying a liquid cryogen, this spray manifold (3) located inside the chamber, and outside the drum (1), opposite a portion of the drum wall (1) located in the area where products enter the drum (1),
- this additional spray manifold (3) is capable of directing liquid cryogen to said portion of the drum wall (1) and through this portion of the wall, via said perforations, to the products that enter the drum (1).

2. Device for cooling according to claim 1, **characterised in that** said at least one additional spray manifold (3) is positioned in the bottom position, under the drum (1).

3. Device for cooling according to claim 1, **characterised in that** said at least one additional spray manifold (3) is positioned in the top position, above the drum (1).

4. Device for cooling according to one of the preceding claims, **characterised in that** said means (2) for cooling comprise a cooling manifold (2) located inside the chamber, under the drum (1) or above the drum (1), capable of spraying a liquid cryogen to the drum wall (1) and through this wall to the products, connected in the upstream portion thereof to a source of liquid cryogen through a proportional valve (7).

5. Device for cooling according to claim 4, **characterised in that** said cooling manifold (2) is located in the bottom position under the drum (1), and **in that** said additional spray manifold (3) is also located under the drum (1), and also being connected in the upstream portion thereof to the same source of liquid cryogen.

6. Device for cooling according to claim 5, **characterised in that** said additional spray manifold (3) is located at a distance from the drum wall (1) that does not exceed 3 to 5 centimetres.

7. Method for cooling bulk products, of the type where the products are poured inside a drum (1) mounted in axial rotation, this drum (1) comprising perforations distributed over all or a portion of the cylindrical lateral wall thereof and which is enveloped by a thermally insulated chamber of elongate form along the axis of said drum (1), and where there are means (2) for cooling the products, for example consisting of one or more manifolds for injecting a cryogenic fluid into the drum (1) through said perforations, having the following measures:
- there is in addition at least one additional manifold (3) for spraying a liquid cryogen, this spray manifold (3) located inside the chamber, and outside the drum (1), opposite a portion of the drum wall (1) located in the area where the products enter the drum (1),
- this additional spray manifold (3) is capable of directing liquid cryogen to said portion of the drum wall (1) and through this portion of the wall, via said perforations, to the products that enter the drum (1), and
- using said additional manifold (3), liquid cryogen is sprayed on and through said wall portion, this during all or part of the operation of cooling the products carried out using said means (2) for cooling.

8. Method for cooling according to claim 7, **characterised in that**, in addition to the spraying of cryogen carried out using said additional manifold (3), during all or part of the cooling operation itself, liquid cryogen is also sprayed using said additional manifold (3) before the starting of the cooling operation, i.e. before the entry of the products into the drum (1), in order to pre-cool the drum (1).
